# EUROPEAN PATENT SPECIFICATION

(11) **EP 2 798 280 B1**
(45) Date of publication and mention of the grant of the patent: **15.03.2017**
(21) Application number: 12813251.1
(22) Date of filing: 14.11.2012
(51) Int. Cl.: H05B 3/60, F24H 1/10, F24H 1/12, F24H 1/14, F24H 1/20, F24H 9/20, C25B 1/04, C25B 9/06

(54) **METHOD FOR HEATING LIQUIDS AND A DEVICE FOR ITS REALIZATION**
VERFAHREN UND APPARATUS FÜR FLÜSSIGKEITSERWÄRMUNG
METHODE ET APPAREIL POUR LE CHAUFFAGE D'UN LIQUIDE

(30) Priority: 16.11.2011 BG 11108311
(43) Date of publication of application: 05.11.2014
(73) Proprietor: Stegarev, Mihail Vassilev, 1303 Sofia (BG); Tsankov, Alexandar Nikolov, 1000 Sofia (BG)
(72) Inventor: STEGAREV Mihail Vassilev, 1303 Sofia (BG); STANEV Plamen Petkov, 1505 Sofia (BG); TSANKOV Aleksandar Nikolov, 1000 Sofia (BG)
(74) Representative: Yanakieva-Zlatareva, Maria Nikolova
(86) International application number: PCT/BG2012/000030
(87) International publication number: WO 2013/071376

(56) References cited:
- WO-A1-2005/024301
- CA-A1- 2 613 819
- CA-A1- 2 613 826
- US-A1- 2009 114 733

## Description

### Field of the invention

The invention relates to a method for heating liquids and a device for its realization, which will be applied to heat water or other liquids, including for use in heating systems for industry and households.

### State of the Art

A method for heating liquids known from CA 2 613 819 includes an electrolysis process in electrolysis cell where the electrolyte is heated and Hydrogen and Oxygen gases are released separately. A heat-transferring fluid is heated directly in the electrolysis cell by the heated electrolyte and thru the circulation circuit gives his heat in the accumulating vessel, which contains the liquid to be heated. The process use pulsed power supply. Furthermore, the electrolyte is cooled, which makes it difficult to keep the electrolysis process in optimal limits. In this method for heating water, the electrolyte just gets cooled down rather than being able to provide the required continualy effective flow of warm water. This method has disadvantages of low efficiency of the heating process.

The known from CA 2 613 819 device for heating liquids includes an electrolytic cell with two separated outlets for Hydrogen gas and for Oxygen gas and with controlling and adjusting appliances. A "water-water" heat exchange element located in the electrolytic cell and containing the first heat-transferring fluid is connected to a first circulation circuit, to which a heat exchanger is attached and this heat-exchanger is mounted in an accumulating vessel containing the liquid to be heated. This device has a low efficiency.

Another method for heating liquids known from WO 2005/024301 includes a generation of Hidrogen gas (H2) only, by electrolysis cells. This Hydrogen gas is used for burning of thru flame burner in a combustion chamber where a liquid supplied through a cooling circuit of the combustion chamber is heated. This method has low efficiency of heating the water and has complicated control of the burning process of released Hydrogen gas, which is implosive by nature when burning.

It is known from the same publication a water heating system, where the outlet for hydrogen gas of the electrolytic cell is connected to a burner located in a combustion chamber, where an "air-water" heat exchange element is mounted and connected to a circulation circuit for heating liquids. In general, the method and the device have complicated control, low safety, relatively low efficiency and high operating costs.

### Summary of the Invention

The problem solved with the invention is to create a method for heating liquids and a device for its realization whereby to enhance the efficiency of the whole heating system.

The method for heating liquids includes an electrolysis process in an electrolytic cell where the electrolyte is heated and gas is released. A first heat-transferring fluid is heated directly in the electrolytic cell by the heated electrolyte and gives its heat into the accumulating vessel which contains the liquid to be heated. According to the invention the released gas is Oxy-Hydrogen gas and the temperature of the electrolyte is maintained within the range of 35-65°C. A second heat-transferring fluid is heated with the released Oxy-Hydrogen gas by a gas flame burner. This second heat-transferring fluid is independent from the first heat-transferring fluid and also it gives its heat into the accumulating vessel. The rate of heating both heat-transferring fluids is regulated.

The Oxy-Hydrogen gas is supplied with adjustable pressure to the flame burner.

It's appropriate the adjustable pressure of the supplied Oxy-Hydrogen gas to be within the range of 0.2 to 0.5 bars.

Better performance is obtained when the adjustable pressure of the supplied Oxy-Hydrogen gas is within the range of 0.3 to 0.35 bars.

The rate of heating the second heat-transferring fluid is within the temperature range of 90-120°C.

Heating the first heat-transferring fluid is performed by a "water-water" type heat-exchange element of any known kind.

Heating the second heat-transferring fluid is performed with an "air-water" type heat-exchange element of any known kind.

The device for heating liquids realizing the said method includes an electrolytic cell with gas outlets and with controlling and adjusting appliances. A "water-water" type heat exchange element is located in the electrolytic cell. This heat exchange element contains the first heat-transferring fluid and is connected to a first circulation circuit to wich a heat exchanger is attached and is mounted in an accumulating vessel. The accumulating vessel contains the liquid to be heated. According to the invention, the outlets are for the Oxy-Hydrogen gas, produced by used type of electrolysys and are connected through a pressure regulator to a gas flame burner. The gas flame burner is located in a combustion chamber, where an "air-water" type heat exchange element is mounted and is connected to a second circulation circuit, to which a second heat exchanger is attached. The second heat exchanger is also mounted in the accumulating vessel. Control and temperature regulating devices are mounted to the first and second circulation circuits.

The advantages of the invention are that the created method for heating liquids allows obtaining the desired temperature in a short period of time and with low energy consumption. It allows the implementation of high efficiency small-sized devices, such as the device according to the invention. There is safety in use and also no harmful environmental emissions are released. There is no need to use special materials for the heat-transferring elements. High-pressure is avoided, thus operation security is increased. For the power supply of the electrolysis process direct use of energy from alternative sources is possible. The method is applicable for the creation of devices and appliances for heating liquids, which can be connected to any water heating system using liquids heated up to 100C°.

### Brief description of the drawings

The attached drawings show an example embodiment of the invention where:
Fig. 1 is a Basic Scheme illustrating the method according to the invention;
Fig. 2 is a Block Diagram of the device for realization of the method according to the invention;

### Detailed description of the invention

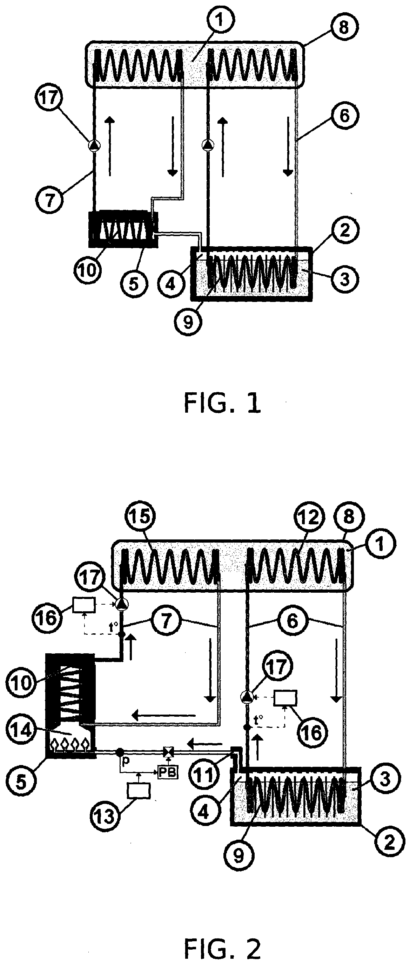

Fig. 1 shows the embodiment of the invention as follows:

The method for heating liquids 1 includes an electrolysis process performed in an electrolytic cell 2, where electrolyte 3 is heated and Oxy-Hydrogen gas 4 is released. A first heat-transferring fluid is heated directly in the electrolytic cell 2 with the heated electrolyte 3 and it gives its heat in the accumulating vessel 8 which contains the liquid 1 to be heated. The temperature of the electrolyte 3 is maintained within the range of 35-65°C. A second heat-transferring fluid is heated with the released Oxy-Hydrogen gas 4 by using a gas flame burner 5. The second heat-transferring fluid 7 is independent from the first heat-transferring fluid 6 and also it gives its heat into the accumulating vessel 8. The two heat-transferring fluids circulate through independent from each other circulation circuits 6, 7. The rate of heating the first and the second heat-transferring fluids is regulated.

The electrolytic cell 2 may include one or a sequence of connected electrolytic cells depending on the volume of the liquid to be heated.

The Oxy-Hydrogen gas 4 is supplied with adjustable pressure to the gas flame burner 5 so as to secure the process to be efficient. The adjustable pressure of the supplied Oxy-Hydrogen gas 4 is within the range of 0.2 to 0.5 bars. It is recommended that the adjustable pressure of the supplied Oxy-Hydrogen gas 4 is within the range of 0.3 to 0.35 bars.

The rate of heating the second heat-transferring fluid is regulated within the temperature range of 90-120°C.

Heating the first heat-transferring fluid is performed through a "water-water" heat exchange element 9 of any known type. Heating the second heat-transferring fluid is performed through an "air-water" heat exchange element 10 of any known type.

To implement the method according to the invention, a device for heating liquids has been designed, schematically shown in Fig. 2. It includes an electrolytic cell 2 with only one outlet 11 for Oxy-Hydrogen gas 4. Control and temperature adjusting appliances are provided to the electrolytic cell 2, (not shown in the figures to keep them simple). In the electrolytic cell 2 a "water-water" heat exchange element 9 is located containing the first heat-transferring fluid and connected to an independent first circulation circuit 6, which is connected to the heat exchanger 12 mounted in the accumulating vessel 8. The liquid 1 to be heated is contained in the accumulating vessel 8. The outlet 11 is connected through a pressure regulator 13 and the corresponding reduction valves (RV) to a gas flame burner 5. The gas flame burner 5 is located in a combustion chamber 14 which is insulated for high temperatures up to 2000°C. In the combustion chamber 14 an "air-water" heat exchange element 10 is mounted and connected to an independent second circulation circuit 7, to which a second heat exchanger 15 is attached. The second heat exchanger 15 is also mounted in the same accumulating vessel 8. The gas flame burner 5, itself, may have one or more nozzles, as shown in Fig. 2, which does not go beyond the scope of the invention and is determined by the volume of the heated liquid in the performance of a particular design. Moreover, control and temperature regulating devices 16 are mounted to the first circulation circuit 6 and to the second circulation circuit 7. Adjusting the heating rate of the first and second heat-transferring fluids is carried out after measuring the temperature of the heat-transferring fluid by the temperature regulating devices 16, and if the temperature is higher than expected, a signal is sent to the corresponding pump 17 which accelerates the circulation of the heat-transferring fluid and thus the temperature regulation is to be effected. If the measured temperature of the heat-transferring fluid is low, respectively - through a signal sent to the pump 17 - the circulation is slowed down and the temperature enters within the limits determined. Furthermore, adjusting the heat of the first and second heat-transferring fluids is performed also with the control and adjusting appliances of the electrolytic cell 2 itself, as well as by controlling and regulating the quantity of the o Oxy-Hydrogen gas 4 produced in the electrolytic cell 2.

Usually, both - the first 6 and second 7 circulation circuits include pumps 17. The heat exchange elements, themselves - "water-water" 9 and "air-water" 10 - as well as the heat exchanger 12 and the second heat exchanger 15 located in the accumulating vessel 8 may be selected from among the known types, and be made compliant with the corresponding amount of the ongoing heat-transferring fluid and with the consequently required sizes of the electrolytic cell 3, the accumulating vessel 8 and the combustion chamber 14. In the case of Figure 2 the above described heat exchange elements 9, 10 and heat exchangers 12 and 15 of pipe (coil) type are shown. This does not restrict the use of other types of heat-exchangers and heat exchange elements, depending on the specific project.

The heated by the implementation of this method liquid 1, which is located in the accumulating vessel 8, can be used directly or be connected to any water heating system using liquids with temperature up to 100°C. This makes the method and the device in any of its modifications applicable with heating systems for the industry and for households.

## Claims

1. A method for heating liquids, including an electrolysis process in an electrolytic cell (2) where the electrolyte (3) is heated and gas (4) is released and a first heat-transferring fluid (6) is heated directly in the electrolyte cell (2) by the heated electrolyte (3) and give its heat in the accumulating vessel (8) which contains the liquid (1) to be heated ***characterized in that*** the released gas is Oxy-Hydrogen gas (4) and the temperature of the electrolyte (3) is maintained within the range of 35-65°C and a second heat-transferring fluid (7) is heated with the released Oxy-Hydrogen gas (4) by a gas flame burner (5), which second heat-transferring fluid (7) is independent from the first heat-transferring fluid (6) and also it gives its heat into the accumulating vessel (8) whereas the rate of heating both heat-transferring fluids is regulated.

2. A method according to claim 1, ***characterized in that*** the Oxy-Hydrogen gas (4) is supplied with adjustable pressure to the gas flame burner (5).

3. A method according to claim 2, ***characterized in that*** the adjustable pressure of the supplied Oxy-Hydrogen gas (4) is within the range of 0.2 to 0.5 bars.

4. A method, according to claim 3, ***characterized in that*** the adjustable pressure of the supplied Oxy-Hydrogen gas (4) is within the range of 0.3 to 0.35 bars.

5. A method according to claim 1, ***characterized in that*** the rate of heating the second heat-transferring fluid is within the temperature range of 90-120°C.

6. A method according to claim 1, ***characterized in that*** the heating of the first heat-transferring fluid is performed by a "water-water" type heat exchange element (9) of any known kind.

7. A method according to any of claims 1 to 6, ***characterized in that*** heating the second heat-transferring fluid is performed with an "air-water" type heat exchange element (10) of any known kind.

8. A device for heating liquids, including an electrolytic cell (2) with outlet**S** (11) and with controlling and adjusting appliances, a "water-water" heat exchange element (9) located in the electrolytic cell (2) and containing the first heat-transferring fluid is connected to a first circulation circuit (6), to which a heat exchanger (12) is attached and is mounted in an accumulating vessel (8) containing the liquid (1) to be heated, ***characterized in that*** the outlets (11) are for the Oxy-Hydrogen gas (4) and are connected through a pressure regulator (13) to a gas flame burner (5) located in a combustion chamber (14) where an "air-water" heat exchange element (10) is mounted and connected to a second circulation circuit (7), to which a second heat exchanger (15) is attached and is mounted in the same accumulating vessel (8), and where control and temperature regulating devices (16) are mounted to the first circulation circuit (6) and to the second circulation circuit (7).

## Patentansprüche

1. Verfahren für Flüssigkeitserwärmung, mit einem Elektrolyseverfahren in einer Elektrolysezelle (2), wobei der Elektrolyt erwärmt wird und Gas (4) freigegeben wird und ein erstes Wärmeübertragungsfluid (6) wird durch den erwärmten Elektrolyt (3) direkt in der Elektrolytzelle erwärmt (3) und gibt seine Wärme in dem Akkumulationsgefäß (8) ab, das die Flüssigkeit (1) zum Erwärmen enthält, **dadurch gekennzeichnet, dass** das freigesetzte Gas Oxy-Hydrogen (4) ist und die Temperatur des Elektrolyten (3) zwischen 35-65 ° C gehalten wird und ein zweites Wärmeübertragungsfluid (7) wird von dem freigelassenen Oxy-Hydrogen durch einen Gasbrenner (5) erwärmt, aber das zweite Wärmeübertragungsfluid (7) ist unabhängig von dem ersten Wärmeübertragungsfliud (6) und gibt auch seine Wärme im Akkumulationsgefäß (8), wobei die Erwärmungsstufe der beiden wärmeübertragenden Fluiden reguliert wird.

2. Verfahren nach Anspruch 1, **dadurch gekennzeichnet, dass** das Oxy-Hydrogen-Gas (4) bei einstellbarem Druck zu dem Gasbrenner(5) zugeführt wird.

3. Verfahren nach Anspruch 2, **dadurch gekennzeichnet, dass** der einstellbare Druck des zugeführten Oxy-Hydrogen- Gases (4) von 0,2 bis 0,5 Bar ist.

4. Verfahren nach Anspruch 3, **dadurch gekennzeichnet, dass** der einstellbare Druck des zugeführten Oxy-Hydrogengases (4) im Bereich von 0,3 bis 0,35 bar liegt.

5. Verfahren nach Anspruch 1, **dadurch gekennzeichnet, dass** die Erwärmungsstufe des zweiten Wärmeübertragungsfluids im Temperaturbereichs von 90-120° C ist.

6. Verfahren nach Anspruch 1, **dadurch gekennzeichnet, dass** die Erwärmung des ersten Wärmeübertragungsfluides durch ein Wasser-Wasser-Typ Wärmeaustauschelement (9) von jeder beliebigen bekannten Art durchgeführt wird.

7. Verfahren nach einem der Ansprüche von 1 bis 6, **dadurch gekennzeichnet, dass** das Erhitzen des zweiten Wärmeübertragungsfluides mit einem Luft-Wasser-Typ Wärmeaustauschelement (10) von jeder beliebigen bekannten Art durchgeführt wird.

8. Apparat für Flüssigkeitserwärmung, umfassend elektrolytische Zellen (2) mit Auslässen (11) und Kontroll- und Steuerapparaten, mit einem in der Elektrolysezelle (2) liegenden Wasser-Wasser-Wärmeaustauschelement (9), das das erste Wärmeübertragungsfluid enthält und mit einem ersten Zirkulationskreis(6) verbunden, zu dem ein in einem Akkumulationsgefäß (8) mit der Erhitzenflüssigkeit (1) montiertes Wärmetauschelement (12) angebracht ist, **dadurch gekennzeichnet, dass** die Auslässe (11) für den Oxy-Hydrogen-Gas (4) sind und durch einen Druckregler (13) mit einem Gasbrenner (5), sich in einer Verbrennungskammer (14) befindend, verbunden sind, in der ein Luft-Wasser-Wärmeaustauschelement(10) montiert ist, das mit einem zweiten Zirkulationskreis (7) verbunden ist, zu dem ein zweiter Wärmetauscher (15) befestigt und im gleichen Akkumulationsgefäß (8) angebracht worden ist, wobei Prüfungs- und Temperatursteuereinrichtungen (16) am ersten (6) und am zweiten Zirkulationskreis (7) montiert sind.

## Revendications

1. Méthode de chauffage de liquides, comprenant un processus électrolytique dans une cellule d'électrolyse (2), où l'électrolyte (3) est chauffé et il se dégage un gaz (4), et le premier fluide de transfert de chaleur (6) est chauffé directement dans la cellule d'électrolyse (2) par l'électrolyte chauffé (3) et libère sa chaleur dans un récipient accumulateur (8), contenant le liquide (1) à chauffer, **caractérisé en ce que** le gaz dégagé est de l'Oxyhydrogène (4) et la temperature de l'électrolyte (3) est maintenue entre 35°C et 65°C et le gaz Oxyhydrogène (4) est utilisé à l'aide d'un brûleur gaz à flamme (5), pour chauffer un deuxième fluide de transfert de chaleur (7), qui est indépendant du premier fluide de transfert de chaleur (6) et lui aussi libère sa chaleur dans un récipient accumulateur (8), le degré de chauffage des deux fluides de transfert de chaleur étant régulé.

2. Méthode selon la revendication 1, **caractérisé en ce qu'**à l'entrée du brûleur gaz à flamme (5), la pression du gaz Oxyhydrogène (4) est réglable.

3. Méthode selon la revendication 2, **caractérisé en ce que** la pression réglable du gaz Oxyhydrogène (4) varie entre 0.2 et 0.5 bars.

4. Méthode selon la revendication 3, **caractérisé en ce que** la pression réglable du gaz Oxyhydrogène (4) varie entre 0.3 et 0.35 bars.

5. Méthode selon la revendication 1, **caractérisé en ce que** le degré de chauffage du deuxième fluide de transfert de chaleur se fait à une température variant entre 90° C et 120°C.

6. Méthode selon la revendication 1, **caractérisé en ce que** le chauffage du premier fluide de transfert de chaleur est fait par un élément - échangeur de chaleur «eau-eau» (9) de tout type connu.

7. Méthode, selon une quelconque des revendications 1 à 6, **caractérisé en ce que** le chauffage du deuxième fluide de transfert de chaleur est fait par un élément - échangeur de chaleur «air-eau» (10) de tout type connu.

8. Appareil de chauffage de liquides comprenant une cellule d'électrolyse (2) avec des trous de sortie (11) et des appareils de contrôle et de réglage, avec un élément - échangeur de chaleur «eau-eau» (9), disposé dans la cellule d'électrolyse (2), comprenant un premier fluide de transfert de chaleur et lié à un premier circuit de circulation (6), auquel est joint un élément - échangeur de chaleur (12), monté dans un récipient accumulateur (8), contenant le liquide à chauffer (1), **caractérisé en ce que** les trous de sortie (11) sont pour le gaz Oxyhydrogène (4) et sont joints par un régulateur de pression (13) au brûleur gaz à flamme (5), disposé dans la chambre de combustion (14), où est monté l'élément - échangeur de chaleur «air-eau» (10), lié à un deuxième circuit de circulation (7), auquel est joint un deuxième élément - échangeur de chaleur (15), monté dans le même récipient accumulateur (8), et où au premier circuit de circulation (6) et au deuxième circuit de circulation (7) sont montés les dispositifs de contrôle et de réglage de la température (16).
